# FASCICULE DE BREVET EUROPEEN

(11) **EP 0 631 482 B1**
(45) Date de publication et mention de la délivrance du brevet: **08.01.1997**
(21) Numéro de dépôt: 94905144.5
(22) Date de dépôt: 21.01.1994
(51) Int. Cl.: A47J 27/092

(54) **DISPOSITIF DE COMMANDE AUTOMATIQUE D'UNE SOUPAPE A LIMITATION DE FLUX**
AUTOMATISCHE BETÄTIGUNGSVORRICHTUNG FÜR EIN DURCHFLUSSREGELVENTIL
AUTOMATIC FLOW CONTROL VALVE CONTROL DEVICE

(30) Priorité: 28.01.1993 FR 9301257
(43) Date de publication de la demande: 04.01.1995
(73) Titulaire: SEB S.A., F-69130 Ecully (FR)
(72) Inventeur: CHAMEROY, Eric, F-21260 Selongey (FR); POTY, Jean-François, F-21000 Dijon (FR); VINCENT, Pascal, F-21000 Dijon (FR)
(86) Numéro de dépôt international: FR9400078
(87) Numéro de publication internationale: WO9416605

(56) Documents cités:
- EP-A- 0 156 669
- FR-A- 2 484 817
- FR-A- 2 585 229
- US-A- 4 932 550

## Description

### DOMAINE TECHNIQUE

La présente invention se rapporte au domaine technique général des appareils de cuisson sous pression, et en particulier aux récipients du type autocuiseur comprenant une cuve et un couvercle rapporté de manière hermétique sur ladite cuve, et pourvus de dispositifs de sécurité et de contrôle de fonctionnement.

Parmi les dispositifs de sécurité et de contrôle de fonctionnement des récipients sous pression, la présente invention concerne plus particulièrement un dispositif de commande d'une soupape à limitation de flux montée dans le couvercle du récipient, ledit dispositif comportant une poignée de couvercle dans laquelle est monté à coulissement radial entre deux positions de butée, un verrou libérant la soupape dans une première position de butée, et maintenant ladite soupape en position d'échappement de flux dans une seconde position de butée.

### TECHNIQUE ANTERIEURE

Il est bien évidemment déjà connu d'avoir recours à des soupapes de limitation de flux placées dans le couvercle d'appareil de cuisson afin de permettre en début de cuisson l'échappement de l'air ambiant emprisonné dans le récipient. Ainsi, dans le brevet FR-A-2585229, il est décrit un autocuiseur dont le couvercle est équipé d'une soupape à limitation de flux logée dans un corps monté dans une ouverture pratiquée dans le couvercle. La soupape est destinée à venir obturer le siège du corps à partir d'une certaine pression interne de fonctionnement, et au contraire à laisser passer vers l'extérieur l'air contenu dans le récipient en dessous d'une certaine pression. Dans sa position haute de fermeture du siège, l'extrémité supérieure de la soupape vient s'engager dans un orifice ménagé dans un verrou monté mobile radialement dans le couvercle. Cette dernière position correspond donc à celle dans laquelle le couvercle est fermé et l'autocuiseur sous pression. Lorsque l'utilisateur veut ouvrir l'autocuiseur, il actionne tout d'abord la soupape de sécurité permettant d'évacuer la vapeur sous pression ce qui correlativement libère la soupape à limitation de flux qui vient occuper sa position basse et libérer le verrou. Ce dernier peut alors être mis en mouvement par un bouton poussoir actionné par l'un des doigts de l'utilisateur afin de venir occuper une position de déverrouillage permettant l'enlèvement du couvercle. Inversement, lors de la fermeture, l'utilisateur après avoir mis en place le couvercle sur la cuve avec indexation, doit amener le verrou dans sa position permettant la montée libre de la soupape à limitation de flux en agissant sur le bouton poussoir. Au début de la phase de cuisson l'air frais est alors évacué par l'intermédiaire de la soupape qui reste en position basse tant qu'un certain niveau de température et de pression minimale n'est pas atteint.

Un tel dispositif antérieur souffre essentiellement d'un inconvénient lié à la présence d'une poignée s'étendant essentiellement radialement et qui doit impérativement être d'une longueur suffisante pour permettre précisément à la main de l'utilisateur de pouvoir actionner librement le bouton poussoir de libération du verrou. Cette notion d'encombrement est perçue de manière particulièrement négative par les utilisateurs eu égard à la faible place généralement disponible dans une cuisine pour le rangement des appareils d'une part, et compte tenu des risques de renversement accrus des appareils présentant des pièces, poignées ou autres éléments particulièrement dégagés du corps principal de l'appareil.

Enfin un tel dispositif présente l'inconvénient d'être manuel alors que le consommateur recherche actuellement des appareils où toutes les opérations manuelles sont précisément supprimées en totalité, ou du moins réduites.

### EXPOSE DE L'INVENTION

L'objet de la présente invention vise en conséquence à remédier aux inconvénients énumérés précédemment, et à proposer un nouveau dispositif de commande d'une soupape a limitation de flux permettant de réduire l'encombrement total de l'appareil tout en permettant une commande automatique de la soupape, et ce en toute sécurité.

Un autre objet de l'invention vise à proposer un dispositif de commande automatique d'une soupape à limitation de flux dans laquelle l'automaticité de la commande s'effectue aussi bien lors de la phase de fermeture de l'appareil que dans sa phase d'ouverture.

Un objet complémentaire de l'invention vise à fournir un dispositif de commande automatique d'une soupape à limitation de flux dans laquelle le réarmement du dispositif est effectué automatiquement.

Les objets assignés à l'invention sont atteints à l'aide d'un dispositif de commande d'une soupape à limitation de flux montée dans le couvercle d'un appareil de cuisson sous pression, ledit dispositif comportant une poignée de couvercle dans laquelle est monté à coulissement radial entre deux positions de butée, un verrou permettant le libre déplacement de la soupape dans une première position de butée et maintenant la soupape en position d' échappement de flux dans une seconde position de butée caractérisé en ce que :
- le verrou est monté à coulissement élastique à partir d'une position de rappel correspondant à sa première position de butée,
- le verrou est associé à un système de verrouillage-déverrouillage de son coulissement ledit système assurant d'une part le verrouillage en position dudit verrou dans une position correspondant sensiblement à la seconde position de butée, et d'autre part son déverrouillage automatique lors de la fermeture du couvercle sur la cuve de l'appareil de cuisson.

### DESCRIPTION SOMMAIRE DES DESSINS

Les caractéristiques et avantages de l'invention ressortiront mieux à la lecture de la description donnée ci-après, à titre d'exemple non limitatif, et en référence aux dessins annexés dans lesquels :
- Les figures 1 et 1a représentent respectivement selon une coupe transversale partielle et une vue de dessus partiellement arrachée, une poignée de couvercle et une poignée de cuve en position d'ouverture, lesdites poignées ètant pourvues d'un dispositif de commande conforme à l'invention.
- Les figures 2 et 2a représentent respectivement selon une coupe transversale partielle et une vue de dessus partiellement arrachée, une poignée de couvercle d'appareil de cuisson dans une position de pré-fermeture finale par rapport à une poignée de cuve, ladite poignée de couvercle étant pourvue d'un dispositif de commande conforme à l'invention.
- Les figures 3 et 3a représentent les mêmes éléments que les figures précédentes, les poignées étant en position de fermeture.

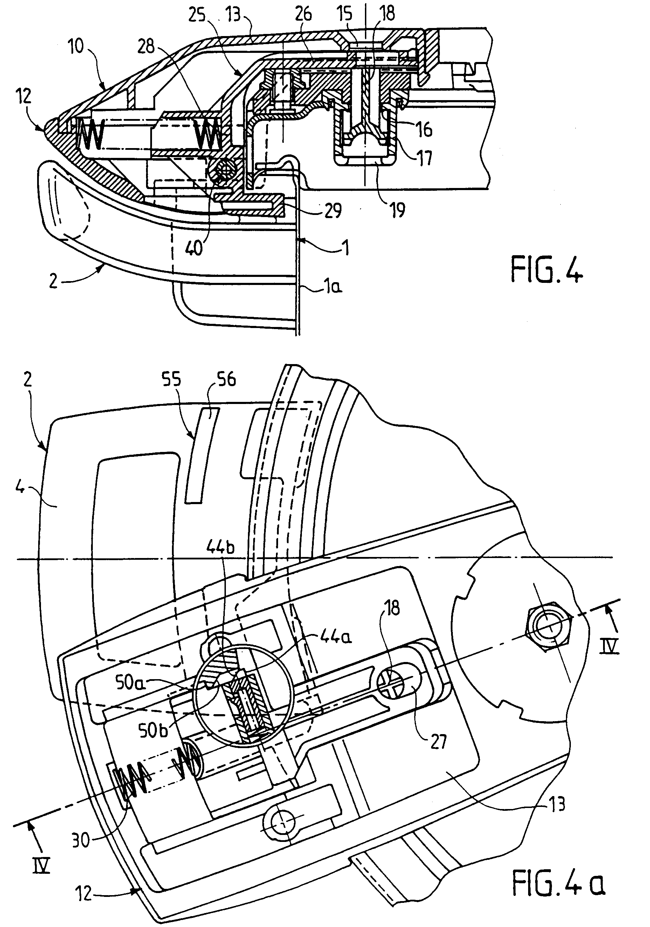

- Les figures 4 et 4a représentent les mêmes éléments que les figures précédentes, les poignées étant en position d'ouverture et le dispositif de commande conforme à l'invention étant en position de déverrouillage.
- La figure 5 représente selon une vue en coupe partielle un détail de réalisation d'un verrou conforme à l'invention.
- La figure 6 représente selon une vue de dessus, une poignée de cuve pourvue d'un moyen de déclenchement conforme à l'invention.
- La figure 7 montre selon une coupe transversale, un détail d'une poignée de cuve pourvue de moyens de déclenchement et d'une rampe de commande conforme à l'invention.

### MANIERE DE REALISER L'INVENTION

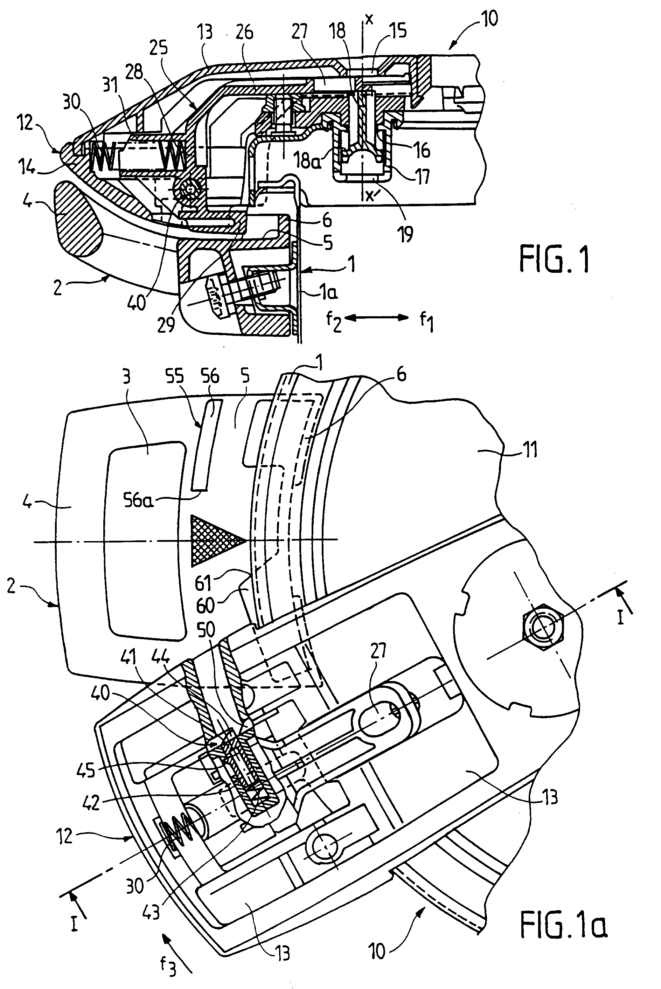

Le dispositif de commande d'une soupape à limitation de flux est déstiné à équiper un appareil de cuisson sous pression, tel qu'un autocuiseur par exemple, comportant, tel que cela est montré par exemple à la figure 1, une cuve 1 délimitée par une paroi 1a, par exemple cylindrique, pourvue d'au moins une poignée de cuve 2. Cette dernière est solidaire par tous moyens appropriés de la paroi 1a et présente un profil ergonomique facilitant la préhension. A cette fin la poignée de cuve 2 comporte une découpe centrale 3 définissant tel que cela est montré par exemple à la figure 1a, une anse externe 4. Dans la zone de la poignée de cuve 2 opposée à l'anse externe 4 et en conséquence située au voisinage de la paroi 1a, la poignée 2 comporte une surface plane 5 se terminant au voisinage de la paroi 1a par un rebord 6 longeant ladite paroi 1a.

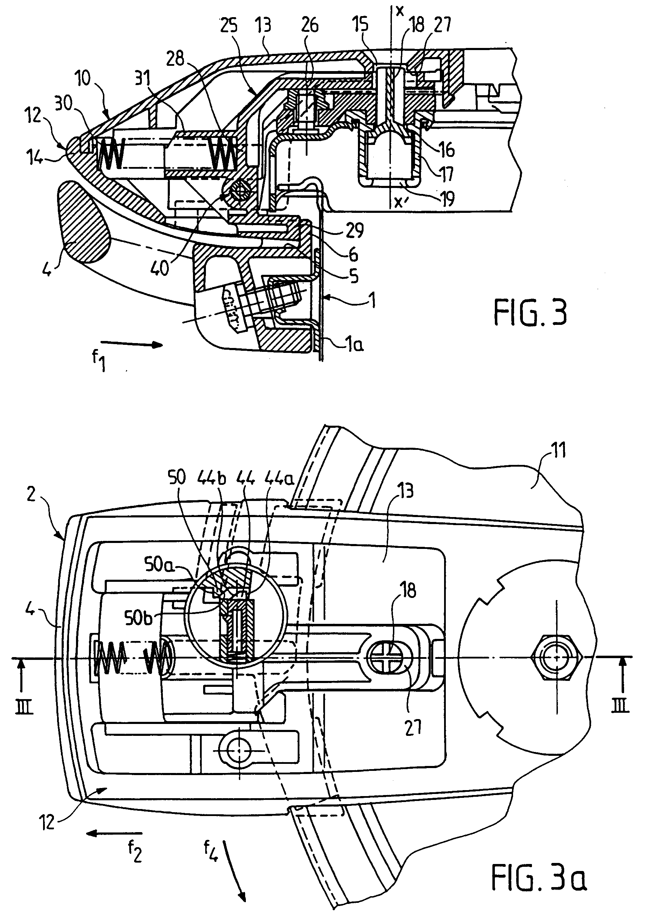

La cuve 1 est destinée à être fermée par exemple à l'aide d'un système à baïonnette comportant des rampes périphériques réparties sur la cuve 1 et sur un couvercle 10, limité extérieurement à sa partie supérieure par une plaque de fermeture 11. Le couvercle 10 est pourvu d'une poignée de couvercle 12 déstinée à être superposée et alignée avec la poignée de cuve 2 en position de fermeture de l'appareil (Figure 3a). La poignée de couvercle 12 est délimitée extérieurement par une coiffe 13 formant les parties supérieures et latérales de la poignée 12, ladite coiffe 13 étant solidaire d'une pièce inférieure 14 formant la partie inférieure de la poignée de couvercle 12. La coiffe 13 présente dans sa partie déstinée à être située au-dessus de la cuve 1, un orifice 15 aligné avec l'ouverture 16 d'une pièce formant le corps 17 d'une soupape 18 de limitation de flux. La soupape 18 est montée librement mobile selon l'axe x-x' du corps 17 entre une position basse (non représentée aux figures) correspondant sensiblement à la pression atmosphérique, et une position haute montrée à la figure 3, dans laquelle la garniture annulaire 18a de la partie inférieure de la soupape 18 vient en appui étanche contre l'ouverture 16 formant siège d'étanchéité. Dans la position basse de la soupape 18, et dans toutes les positions intermédiaires de la soupape 18 précédant sa position d'étanchéité montrée à la figure 3, il y a libre circulation de l'air entre l'extérieur et le volume interne de la cuve 1 par l'intermédiaire de l'orifice 15, de l'ouverture 16 et d'un trou 19 situé à la partie inférieure du corps 17.

Le dispositif de commande de la soupape 18 conforme à l'invention comporte également un verrou 25 monté à coulissement radial en considération du centre du récipient (non représenté aux figures) dans la poignée de couvercle 12. Le verrou 25 définit une pièce sensiblement en L comprenant un premier jambage 26 sensiblement parallèle à la coiffe 13 et pourvu d'un perçage 27 et un second jambage 28 s'étendent sensiblement perpendiculairement au jambage 26 et pourvu à sa partie terminale d'un doigt de commande 29. Le verrou 25 est monté à coulissement élastique, par exemple à l'aide d'un ressort de compression 30 enfilé dans un logement 31 du verrou 25 et dont la force de rappel dirigée selon la flèche f1 (figure 1) en direction du centre du récipient sert à définir une position de rappel du verrou 25 correspondant à une première position de butée formant une position de rappel radiale interne. Le verrou 25 est monté à coulissement radial selon les deux directions opposées f1, f2 entre deux positions de butée. Lorsque le verrou 25 atteint la position de butée montrée à la figure 3 correspondant à sa première position de butée, le doigt de commande 29 est par exemple en appui contre le rebord 6 et l'axe du perçage 27 est aligné avec l'axe x-x' du corps 17. Dans cette première position de butée la soupape 18 est libérée par le verrou 25 et est donc librement mobile selon l'axe x-x' dans le corps 17 et peut occuper toutes les positions possibles entre sa position basse et sa position haute suivant les conditions de pression régnant dans la cuve 1. En particulier la soupape 18, peut occuper sa position haute d'étanchéité correspondant à une pression normale de fonctionnement de l'appareil, les deux poignées étant bien évidemment en position de fermeture. Le verrou 25 possède au moins une autre position de butée définie par construction et correspondant à une limitation de son déplacement selon la direction f2. Cette seconde position de butée, formant une position de butée radiale externe, est par exemple celle montrée à le figure 1, position dans laquelle le perçage 27 n'est plus aligné avec l'axe x-x'. L'extrémité du premier jambage 26 est située au-dessus et au moins en partie au droit de l'ouverture 16 et empêche en conséquence le libre déplacement de la soupape 18 par blocage de son extrémité supérieure, la soupape 18 ne pouvant atteindre sa position haute d'étanchéité. Dans cette seconde position de butée le verrou 25 maintient la soupape 18 dans une position d'échappement de flux permettant la libre communication entre l'intérieur de la cuve 1 et l'extérieur ce qui permet en début de cuisson un échappement de flux vers l'extérieur.

Le verrou 25 est associé à un système de verrouillage-déverrouillage automatique 40 de son coulissement, le système assurant d'une part le verrouillage en position du verrou 25 à l'encontre de la force de rappel f1 du ressort 30 dans une position correspondant sensiblement à la seconde position de butée (figure 1), et d'autre part son déverrouillage automatique lors de la fermeture du couvercle 10 sur la cuve 1 de l'appareil de cuisson.

Le système de verrouillage-déverrouillage automatique 40 comprend des moyens de verrouillage comportant une gâchette 41 (tel que montrée par exemple aux figures 1a, 2a, 3a et 5) montée élastiquement mobile dans un siège de réception 42 ménagé dans le corps du verrou 25. Le siège 42 et la gâchette 41 s'étendent sensiblement perpendiculairement par rapport à la direction de coulissement du verrou 25 et selon un plan sensiblement parallèle à la plaque de fermeture 11 du couvercle 10. La gâchette 41 est par ailleurs montée élastiquement mobile selon son axe d'extension par l'intermédiaire d'un ressort de compression 43 disposé au fond du siège 42. La gâchette 41 est également pourvue dans sa partie terminale opposée au ressort de compression 43, d'un ergot de blocage 44 présentant une face de verrouillage 44a s'étendant perpendiculairement au fond du siège 42 et à la direction f1 ainsi qu'une face d'effacement 44b inclinée par rapport à la face de verrouillage (Figure 3a). La course de la gâchette 41 à l'encontre de la force du ressort 43 est limitée dans une position de rappel par un plot 45 engagé à demeure dans une rainure du siège de réception 42. La longueur de la rainure est calculée pour que l'ergot 44 dépasse suffisament hors du siège de réception 42 lorsque le plot 45 vient buter contre l'extrémité terminale de la rainure située à l'opposé du ressort 43. Les moyens de verrouillage comprennent également un contre-ergot de blocage 50 fixe, solidaire de la poignée de couvercle 12 et comportant également une contre-face de verrouillage 50a et une contre-face d'effacement 50b inclinée. Le contre-ergot de blocage 50 et l'ergot de blocage 44 sont montés relativement tel que cela est montré à la figure 1a par exemple, de manière à coopérer pour bloquer le coulissement du verrou 25 à l'encontre de la force de rappel du ressort 30, sensiblement dans sa seconde position de butée montrée aux figures 1 et 1a. Le blocage s'effectue par engagement relatif des faces de verrouillage 44a et contre-face de verrouillage 50a.

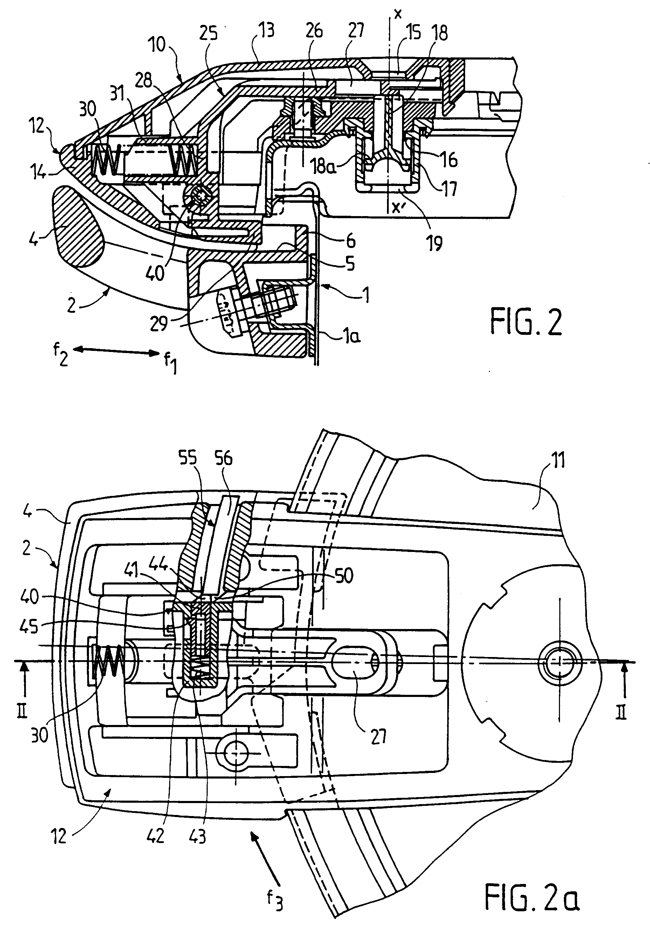

Le système de verrouillage-déverrouillage automatique 40 comprend également des moyens de déclenchement 55 susceptibles d'agir sur les moyens de verrouillage lors de la fermeture du couvercle 10 sur la cuve 1 afin d'assurer la séparation des moyens de verrouillage en vue de libérer le verrou 25. Les moyens de déclenchement 55 sont situés sur la poignée de cuve 2, avantageusement sur la surface plane 5 à proximité du bord latéral de cette dernière de manière à être engagés uniquement lorsque la poignée du couvercle 12 vient au voisinage de sa position de fermeture relativement à la poignée de cuve 2. Cette position de pré-fermeture (Figure 2a) correspond à un début d'alignement des deux poignées. Avantageusement, les moyens de déclenchement 55 comprennent une butée 56 de forme sensiblement parallèlepipèdique par exemple, formant surélévation par rapport à la surface plane 5 et comportant une face de butée 56a de manière à pouvoir être engagée par eu moins une partie inférieure de l'ergot 44 pour causer le déplacement de la gâchette 41 à l'encontre de la force du ressort 43. Ainsi le déplacement à l'encontre de la force du ressort 43 permet à l'ergot 44 de s'effacer dans ledit siège et en conséquence de quitter se position de blocage vis à vis du contre-ergot de blocage 50 par dégagement relatif des faces de verrouillage 44a et contre-face de verrouillage 50a, et de provoquer ainsi la libération du verrou 25.

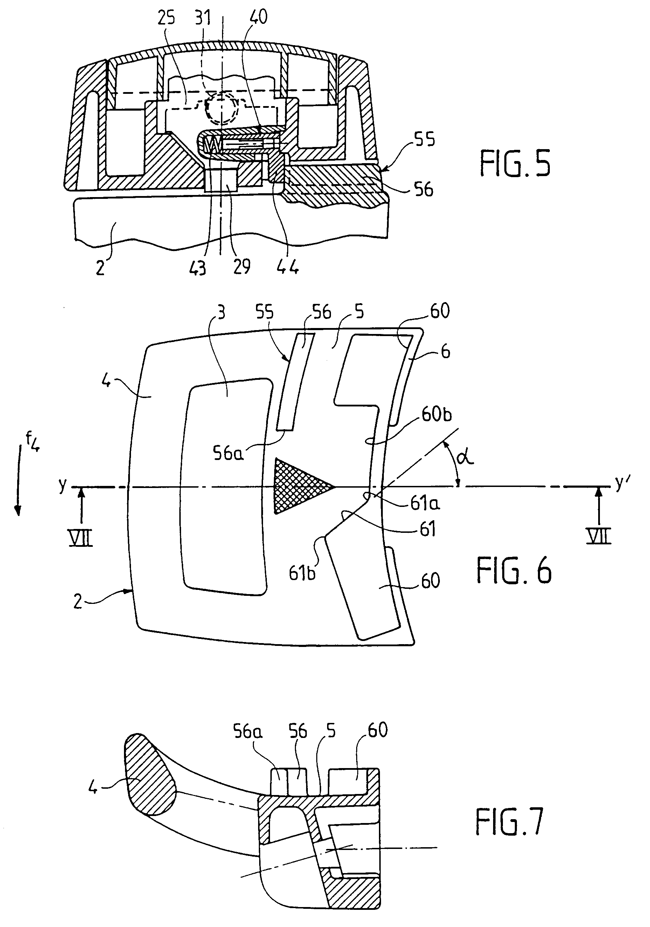

Le dispositif de commande automatique d'une soupape à limitation de flux conforme à l'invention comporte en outre des moyens de réarmement automatique du système de verrouillage 40, lesdits moyens étant mis en oeuvre lors de l'ouverture de l'appareil de cuisson et de l'enclenchement de la rotation relative de la poignée de couvercle 12 et de la poignée de cuve 2. Les moyens de réarmement automatique comprennent le doigt de commande 29 solidaire du verrou 25 situé de préférence à l'extrémité du deuxième jambage 28 pour constituer la partie inférieure dudit verrou. Les moyens de réarmement automatiques comprennent également une rampe de commande 60 montrée en particulier à la figure 6, solidaire de la poignée de cuve 2 et formant une surélévation sur la surface plane 5. La rampe de commande 60 définit une section de came inclinée 61 formant un angle α par rapport à l'axe de symétrie y-y' de la poignée de cuve 2 et située au voisinage dudit plan de symétrie et du côté correspondant à l'ouverture de l'appareil. La rampe de commande 60 forme au moins en partie le rebord 6 et définit également une section de base 60b normale à l'axe de symétrie y-y' et s'étendant par rapport audit axe, du côté opposé à celui ou est situé la section inclinée 61. En position de fermeture de l'appareil, le doigt de commande 29 repose contre la section de base 60b, ce qui correspond à la première position de butée du verrou 25. Les emplacements de la rampe de commande 60 et de la section inclinée 61 sont choisis sur la surface plane 5 de manière à ce que la rampe 60 soit engagée par le doigt de commande 29 lors de l'ouverture par rotation du couvercle 10. De la même façon l'inclinaison et la longueur de la section inclinée 61 sont suffisantes pour permettre lorsque le doigt de commande 29 engage la partie la plus basse 61a de la section inclinée 61, audit doigt 29 de se déplacer au fur et à mesure de l'ouverture selon une composante radiale centrifuge conduisant, lorsque le doigt de commande 29 atteint le point le plus haut 61b de la section inclinée 61, à un réarmement du verrou 25. En effet, lorsque le doigt de commande 29 se déplace sur la section inclinée 61 le verrou 25 est progressivement amené à coulisser dans la direction f2 pour atteindre sa seconde position de butée. Au cours de ce coulissement l'ergot de blocage 44 prend appui également progressivement par sa face d'effacement 44b contre le contre-ergot de blocage 50 et plus précisément contre la contre-face d'effacement 50b, ce qui permet à la gâchette 41 de s'effacer pour permettre le réarmement automatique de l'ergot 44 contre le contre ergot de blocage 50 tel que cela est montré à la figure 1a.

Le mode de fonctionnement du dispositif de commande automatique conforme à l'invention est le suivant.

Avant la fermeture de l'appareil de cuisson, l'utilisateur prépositionne le couvercle 10 sur la cuve 1 de la façon montrée à la figure 1a pour que les poignées de cuve 2 et de couvercle 12 soient décalées et non superposées. Dans cette position le verrou 25 occupe sa seconde position de butée correspondant à celle montrée à la figure 1, position dans laquelle la soupape 18 n'est pas libre de se déplacer dans le corps 17. L'utilisateur procède ensuite progressivement à la fermeture de l'appareil en amenant progressivement par rotation selon la flèche f3 les deux poignées 2, 12 vers une position de superposition et d'alignement tel que montré à la figure 2a. Dans la position de préfermeture montrée à la figure 2a les deux poignées 2, 12 ne sont pas encore complètement alignées et on voit sur la figure 2a que l'ergot 44 vient engager la face avant 56a de la butée de déclenchement 56. Dans cette position de préfermeture, la soupape 18 est toujours tel que cela est montré à la figure 2, maintenue à l'encontre d'un déplacement libre par l'extrémité du premier jambage 26 qui obture partiellement l'orifice 15. Il doit donc être noté qu'au cours de cette phase de fermeture la soupape 18 étant toujours maintenue constament en position d'ouverture il est toujours possible à la vapeur de s'échapper ce qui constitue un facteur non négligeable de sécurité. En poursuivant le mouvement de superposition et d'alignement progressif des poignées 2, 12 l'utilisateur atteint la position montrée à la figure 3a, position correspondant à la fermeture complète et hermétique de l'appareil de cuisson. Au cours du passage de la position montrée à la figure 2a à la position montrée à la figure 3a, la gâchette 41 est engagée par la butée 56 et s'est déplacée à l'intérieur du siège de réception 42 à l'encontre du ressort 43, ce qui a eu pour conséquence de désolidariser et séparer l'ergot de blocage 44 du contre ergot de blocage 50. Dès lors le verrou 25 se trouve dévérrouillé et soumis à l'action du ressort 30 et vient occuper sa première position de butée montrée à la figure 3. Dans cette position, correspondant à la position de fermeture de l'appareil de cuisson, le perçage 27 est aligné avec l'axe x-x', et donc avec l'orifice 15 et l'ouverture 16 ce qui permet un libre déplacement dès la fermeture complète de l'appareil de cuisson, de la soupape 18 laquelle peut être soumise librement aux conditions de pression règnant à l'intérieur de l'appareil. La pression et les conditions de température étant faibles au début de la cuisson, la soupape 18 permet donc l'évacuation de l'air frais, ladite soupape ne venant ensuite que progressivement s'appliquer contre l'ouverture 16 formant siège d'étanchéité. Le dispositif de commande automatique conforme à l'invention a donc permis de ne libérer la soupape 18 que dans sa position finale de fermeture, alors que dans toutes les positions intermédiaires la soupape 18 est maintenue en position d'échappement de flux.

Inversement, lors de l'ouverture, le réarmement du verrou 25 c'est-à-dire son passage de la position de libération de la soupape montrée à la figure 3 à la position de blocage de la soupape montrée à la figure 1, s'effectue automatiquement grâce à la rampe de commande 60 et à sa section inclinée 61. Lors de l'ouverture de l'appareil et de la rotation de la poignée de cuve 12 selon la flèche f4 montrée à la figure 3a, le doigt de commande 29 en venant s'appuyer sur la section inclinée 61 et se déplacer le long de cette dernière, va commander le déplacement du verrou 25 selon la flèche f2. Au cours de son déplacement selon la flèche f2, le verrou 25 et en particulier l'ergot de blocage 44 va progressivement s'effacer à l'intérieur du siège 42 tout en s'appuyant sur la contreface inclinée 50b du contre-ergot de blocage 50. L'effacement de l'ergot de blocage 44 s'interrompt dès que ce dernier est passé sur la contre-face 50b du contre ergot de blocage 50 ce qui permet au ressort de compression 43 de faire ressortir la gâchette 41 de son siège de réception 42 permettant ainsi un réarmement automatique des moyens de verrouillage dans la position correspondant à la figure 1a. Le verrou 25 est alors à nouveau bloqué dans une position empêchant tout déplacement de la soupape 18. Il est également important de noter que l'ouverture de l'appareil de cuisson est rendue impossible tant que la pression n'est pas redevenue normale dans l'appareil puisque le maintien de la soupape 18 dans sa position haute empêche tout coulissement du verrou 25 dans la direction f2.

### POSSIBILITES D'APPLICATION INDUSTRIELLE

L'invention trouve son application dans la réalisation d'appareils de cuisson sous pression, en particulier d'autocuiseurs.

## Revendications

1. Dispositif de commande d'une soupape (18) à limitation de flux montée dans le couvercle (10) d'un appareil de cuisson sous pression, ledit dispositif comportant une poignée de couvercle (12) dans laquelle est monté à coulissement radial entre deux positions de butée, un verrou (25) permettant le libre déplacement de la soupape (18) dans une première position de butée et maintenant la soupape (18) en position d'échappement de flux dans une seconde position de butée caractérisé en ce que :
- le verrou (25) est monté à coulissement élastique à partir d'une position de rappel correspondant à sa première position de butée,
- le verrou (25) est associé à un système de verrouillage-déverrouillage automatique (40) de son coulissement ledit système assurant d'une part le verrouillage en position dudit verrou (25) dans une position correspondant sensiblement à la seconde position de butée, et d'autre part son déverrouillage automatique lors de la fermeture du couvercle (12) sur la cuve (1) de l'appareil de cuisson.

2. Dispositif selon la revendication 1 caractérisé en ce que le système de verrouillage-déverrouillage (40) comprend des moyens de verrouillage (41,50) assurant par coopération le blocage du verrou (25) dans sa seconde position de butée, et des moyens de déclenchement (55) agissant sur les moyens de verrouillage (41, 50) lors de la fermeture du couvercle (10) sur la cuve (1) pour assurer la séparation des moyens de verrouillage (41, 50) et la libération du verrou (25).

3. Dispositif selon la revendication 2 caractérisé en ce que les moyens de verrouillage (41, 50) sont situés sur la poignée du couvercle (12) et les moyens de déclenchement (55) sont situés sur la poignée de la cuve (2), les deux poignées (2, 12) étant mobiles relativement et déstinées à être superposées en position de fermeture de l'appareil.

4. Dispositif selon la revendication 3 caractérisé en ce que les moyens de verrouillage comprennent d'une part une gâchette (41) montée élastiquement mobile dans un siège de réception (42) ménagé dans le corps du verrou (25), ladite gâchette étant pourvue d'un ergot de blocage (44), et d'autre part un contre-ergot de blocage (50), fixe et solidaire de la poignée de couvercle (12), ledit contre ergot (50) et l'ergot (44) étant montés relativement de manière à coopérer pour bloquer le coulissement du verrou (25) sensiblement dans sa seconde position de butée.

5. Dispositif selon la revendication 4 caractérisé en ce que la gâchette (41) est montée élastiquement mobile selon une direction sensiblement perpendiculaire à l'axe de coulissement du verrou (25).

6. Dispositif selon l'une des revendications 4 à 5 caractérisé en ce que les moyens de déclenchement comprennent une butée (56), solidaire de la poignée de cuve (2) et disposée sur cette dernière de manière à être engagée par la gâchette (41) de verrouillage lorsque la poignée du couvercle (12) vient au voisinage de sa position de fermeture relativement à la poignée de cuve (2) pour causer le déplacement de la gâchette (41) hors de sa position de blocage , et libérer ainsi le verrou (25).

7. Dispositif selon l'une des revendications précédentes caractérisé en ce qu'il comporte des moyens de réarmement automatique (29, 60) du système de verrouillage-déverrouillage (40), mis en oeuvre lors de l'ouverture de l'appareil de cuisson.

8. Dispositif selon la revendication 7 caractérisé en ce que les moyens de réarmement automatique (29, 60) comprennent un doigt de commande (29), solidaire du verrou (25) de préférence à sa partie inférieure et une rampe de commande (60) déstinée à être engagée par ledit doigt, ladite rampe possèdent une section inclinée (61), solidaire de la poignée de cuve (2), à un emplacement tel que lors de l'ouverture du couvercle (10) par rotation, le doigt de commande (29) engage la rampe (60) et se déplace sur cette dernière au fur et à mesure de l'ouverture, selon une composante radiale centrifuge, conduisant le verrou (25) vers sa seconde position de butée, la section inclinée (61) étant de longueur suffisante pour permettre le réarmement automatique des moyens de verrouillage (41, 50) dudit verrou.

9. Dispositif selon les revendications 1 à 8 caractérisé en ce que le verrou (25) et la gâchette (41) sont montés élastiquement mobiles à l'aide de ressorts de compression (30, 43).

10. Autocuiseur équipé d'un dispositif conforme à l'une des revendications 1 à 9.

## Claims

1. A device for controlling a flow-limiting valve (18) mounted in the lid (10) of an appliance for cooking under pressure, said device including a lid handle (12) in which a latch (25) is mounted to slide radially between two stop positions, enabling the valve (18) to move freely when in a first stop position, and keeping the valve (18) in a flow-escape position when in a second stop position, the device being characterized in that:
. the latch (25) is mounted to slide resiliently from a return position corresponding to its first stop position; and
. the latch (25) is associated with a system (40) for automatically locking and unlocking its sliding, said system serving firstly to lock the position of said latch (25) in a position corresponding substantially to the second stop position, and secondly to unlock it automatically during closure of the lid (12) on the bowl (1) of the cooking appliance.

2. A device according to claim 1, characterized in that the locking and unlocking system (40) comprises locking means (41, 50) which co-operate to lock the latch (25) in its second stop position, and release means (55) acting on the locking means (41, 50) during closure of the lid (10) on the bowl (1) to ensure separation of the locking means (41, 50) and release of the latch (25).

3. A device according to claim 2, characterized in that the locking means (41, 50) are situated on the lid handle (12) and the trip means (55) are situated on the bowl handle (2), the two handles (2, 12) being movable relative to each other and being designed to be superposed in the closed position of the appliance.

4. A device according to claim 3, characterized in that the locking means comprise firstly a trigger (41) resiliently mounted to move in a receiving seat (42) formed in the body of the latch (25), said trigger being provided with a locking stud (44), and secondly a stud-engaging catch (50) that is stationary and secured to the lid handle (12), said catch (50) and the stud (44) being relatively mounted in such a manner as to co-operate to prevent sliding of the latch (25) substantially in its second stop position.

5. A device according to claim 4, characterized in that the trigger (41) is resiliently mounted to move along a direction that is substantially perpendicular to the sliding axis of the latch (25).

6. A device according to claim 4 or 5, characterized in that the trip means comprise a stop (56) secured to the bowl handle (2) and disposed thereon in such a manner as to be engaged by the locking trigger (41) when the lid handle (12) comes close to its closure position relative to the bowl handle (2) so as to cause the trigger (41) to be moved away from its locking position, thereby releasing the latch (25).

7. A device according to any preceding claim, characterized in that it includes automatic re-cocking means (29, 60) for re-cocking the locking and unlocking system (40) and operated during opening of the cooking appliance.

8. A device according to claim 7, characterized in that the automatic recocking means (29, 60) comprise a control finger (29) secured to the latch (25), preferably at the bottom portion thereof, and a control ramp (60) designed to be engaged by said finger, said ramp having an inclined section (61) and being secured to the bowl handle (2) in such a position that, during opening of the lid (10) by rotation, the control finger (29) engages the ramp (60) and moves thereover as opening takes place with a radially outward component, thereby bringing the latch (25) towards its second stop position, the inclined section (61) being of sufficient length to enable the locking means (41, 50) of said latch to be automatically recocked.

9. A device according to claims 1 to 8, characterized in that the latch (25) and the trigger (41) are mounted to move resiliently by means of compression spring (30, 43).

10. A pressure cooker fitted with a device according to any one of claims 1 to 9.

## Patentansprüche

1. Steuervorrichtung für ein Durchflußbegrenzungsventil (18), das in dem Deckel (10) eines Druckkochtopfes angebracht ist, wobei die Vorrichtung einen Deckelgriff (12) aufweist, in dem zwischen zwei Anschlagstellungen radial verschiebbar ein Riegel (25) angebracht ist, der die freie Verstellung des Ventils (18) in eine erste Anschlagposition ermöglicht und das Ventil (18) in der Stellung der Durchflußfreigabe in einer zweiten Anschlagposition hält, dadurch gekennzeichnet, daß:
- der Riegel (25) so angeordnet ist, daß er ausgehend von einer seiner ersten Anschlagstellung entsprechenden Rücksetzstellung elastisch verstellt werden kann,
- der Riegel (25) einem System (40) zum automatischen Verriegeln/Entriegeln seiner Verschiebung zugeordnet ist, wobei das System zum einen das ortsfest Verriegeln des Riegels (25) in einer Stellung gewährleistet, die im wesentlichen der zweiten Anschlagstellung entspricht, und zum anderen sein automatisches Entriegeln beim Verschließen des Deckels (12) auf dem Topf (1) des Kochgeräts.

2. Vorrichtung nach Anspruch 1, dadurch gekennzeichnet, daß das System (40) zum Verriegeln/Entriegeln Verriegelungsmittel (41, 50) aufweist, die durch Zusammenwirken das Blockieren des Riegels (25) in seiner zweiten Anschlagstellung gewährleisten, sowie Auslösemittel (55), die auf die Verriegelungsmittel (41, 50) beim Schließen des Deckels (10) auf den Topf (1) einwirken, um das Trennen der Verriegelungsmittel (41, 50) und das Freigeben des Riegels (25) zu gewährleisten.

3. Vorrichtung nach Anspruch 2, dadurch gekennzeichnet, daß die Verriegelungsmittel (41) an dem Griff (12) des Deckels angeordnet und die Auslösemittel (55) an dem Griff (2) des Topfes angeordnet sind, wobei die beiden Griffe (2, 12) relativ zueinander bewegbar und dafür vorgesehen sind, in der Verschlußstellung des Geräts übereinander angeordnet zu sein.

4. Vorrichtung nach Anspruch 3, dadurch gekennzeichnet, daß die Verriegelungsmittel zum einen einen Zuhalter (41) aufweisen, der elastisch bewegbar in einem Aufnahmesitz (42) angeordnet ist, der in dem Körper des Riegels (25) ausgebildet ist, wobei der Zuhalter mit einem Blockiervorsprung (44) versehen ist, und zum anderen einen Blockiergegenvorsprung (50), der feststehend und fest mit dem Deckelgriff (12) verbunden ist, wobei der Gegenvorsprung (50) und der Vorsprung (44) relativ zueinander so angebracht sind, daß sie zusammenwirken, um das Verschieben des Riegels (25) in seiner zweiten Anschlagstellung zu blockieren.

5. Vorrichtung nach Anspruch 4, dadurch gekennzeichnet, daß der Zuhalter (41) entlang einer Richtung elastisch bewegbar angebracht ist, die im wesentlichen senkrecht zur Bewegungsachse des Riegels (25) ist.

6. Vorrichtung nach einem der Ansprüche 4 bis 5, dadurch gekennzeichnet, daß die Auslösemittel einen Anschlag (56) aufweisen, der fest mit dem Topfgriff (2) verbunden und an diesem so angeordnet ist, daß der Verriegelungs-Zuhalter (41) an ihm angreifen kann, wenn der Deckelgriff (12) in die Nähe seiner Verschlußstellung relativ zum Topfgriff (2) gelangt, um das Verstellen des Zuhalters (41) aus seiner Blockierstellung heraus zu bewirken und dadurch den Riegel (25) freizugeben.

7. Vorrichtung nach einem der vorhergehenden Ansprüche, dadurch gekennzeichnet, daß sie Mittel (29, 60) zum automatischen Zurücksetzen des Systems (40) zum Verriegeln/Entriegeln aufweist, die beim Öffnen des Kochgerätes betätigt werden.

8. Vorrichtung nach Anspruch 7, dadurch gekennzeichnet, daß die Mittel (29, 60) zum automatischen Zurücksetzen einen Steuerzapfen (29) aufweisen, der fest mit dem Riegel (25) vorzugsweise in seinem unteren Abschnitt verbunden sind, und eine Steuerrampe (60), die dafür vorgesehen ist, daß der Zapfen an ihr angreift, wobei die Rampe einen fest mit dem Topfgriff (2) verbundenen, geneigten Abschnitt (61) an einer solchen Stelle aufweist, daß beim öffnen des Deckels (10) durch eine Drehung der Steuerstift (29) an der Rampe (60) angreift und sich im Maße des Öffnens auf dieser entsprechend einer radialen Komponente nach außen verlagert, wodurch der Riegel (25) zu seiner zweiten Anschlagstellung geführt wird, wobei der geneigte Abschnitt (61) eine ausreichende Länge aufweist, um das automatische Zurücksetzen der Verriegelungsmittel (41, 50) des Riegels zu ermöglichen.

9. Vorrichtung nach den Ansprüchen 1 bis 8, dadurch gekennzeichnet, daß der Riegel (25) und der Zuhalter (41) mittels Druckfedern (30, 43) elastisch bewegbar angebracht sind.

10. Dampfkochtopf, der mit einer Vorrichtung nach einem der Ansprüche 1 bis 9 versehen ist.
